# EUROPÄISCHE PATENTSCHRIFT

(11) **EP 1 466 716 B1**
(45) Veröffentlichungstag und Bekanntmachung des Hinweises auf die Patenterteilung: **10.05.2006**
(21) Anmeldenummer: 04006775.3
(22) Anmeldetag: 20.03.2004
(51) Int. Cl.: B29C 47/70, B29C 47/68

(54) **Vorrichtung zum Verteilen von plastischer Kunststoffmasse**
Device to distribute melted plastic material
Installation de distribution pour composition plastique plastifiée

(30) Priorität: 08.04.2003 DE 10315906
(43) Veröffentlichungstag der Anmeldung: 13.10.2004
(73) Patentinhaber: Battenfeld Extrusionstechnik GmbH, 32501 Bad Oeynhausen (DE)
(72) Erfinder: Dohmann, Heinrich, Dipl.-Ing., 37671 Höxter (DE); Seibel, Stefan, Dipl.-Ing., 33178 Kirchborchen (DE)

(56) Entgegenhaltungen:
- DE-B- 1 182 420
- US-A- 2 908 938
- US-A- 3 817 377
- US-A1- 2002 163 099

## Beschreibung

Die Erfindung betrifft eine Vorrichtung zum Verteilen von plastischer Kunststoffmasse in einem Extrusionswerkzeug gemäβ Oberbegriff des Ansprudis 1.

Das Dokument DE-B1-1 182 420 offenbart eine solche Vorrichtung.

Zur Herstellung von Rohren ist es erforderlich, den von einem Extruder erzeugten zylinderförmigen Kunststoffschmelzestrom mit Hilfe eines nachfolgenden Werkzeuges in einen kreisringspaltförmigen Schmelzestrom umzuformen. Hierfür ist es wichtig, dass der vom Extruder kommende Schmelzestrom im Werkzeug durch einen zentrisch angeordneten Dorn in die entsprechende Ringströmung überführt wird.

Um den Dorn im Werkzeug mechanisch fixieren zu können ist es erforderlich, diesen mit Hilfe von Verbindungselementen am äußeren Werkzeuggehäuse zu befestigen. Die Verbindungselemente teilen den vom Extruder kommenden Schmelzestrom in mindestens zwei Stränge auf, welche nachfolgend wieder durch entsprechende Verfahren zusammengeführt werden. Bei Polyolefinen mit großem Memorieffekt sind Wendelverteiler und Siebkörbe die hierfür gebräuchlichsten Hilfsmittel.

Die Wendelverteiler erzielen in der Regel eine gute axiale und radiale Durchmischung der Verteilerströme ohne Bindenähte, müssen aber in ihrer geometrischen Gestaltung an die jeweiligen Fließverhalten der Polyolefine angepasst werden. Nachteile dieses Werkzeugsystems sind somit in der komplexen Dimensionierung der Schmelzeführungskanäle zu sehen, die ihren Grund in der großen Anzahl von miteinander korrelierenden Geometrieparametern hat. Dies schränkt die Einsatzmöglichkeit eines Wendelverteilers über die große Bandbreite der Polyolefintypen erheblich ein.

Wendelverteiler mit relativ tiefen Wendeln sind erfahrungsgemäß universeller einsetzbar, führen aber zu einer hohen Verweildauer der Schmelze in den tiefen Wendelgängen. Weiterhin ist bei dieser Form der Ausführung sowohl die Verweilzeit der einzelnen Fließpfade als auch der Schergeschwindigkeitsbereich der einzelnen Schmelzepartikel höchst heterogen. Die genannten Inhomogenitäten führen zu unterschiedlichen Temperaturen in der Schmelze als auch zum Aufbau von Orientierungszuständen und wirken sich schließlich nachteilig in der Rohrqualität aus.

Siebkorbwerkzeuge haben bei der Rohrextrusion prinzipiell die gleiche Aufgabe wie Wendelverteilerwerkzeuge. Die Siebkörbe ermöglichten aufgrund ihrer Konstruktion eine zweimalige Umlenkung des Schmelzestroms, so dass auch hierbei eine sehr gute Durchmischung und Homogenisierung der Schmelze stattfindet. Im Gegensatz zu den Wendelverteilern sind sie bei Polyolefinen universeller einsetzbar. Des weiteren ist die mittlere Verweilzeit verhältnismäßig kurz, aber auch die Gesamtbreite des Verweilspektrums, als Kennzeichen für die Selbstreinigung, für die Produktion akzeptabel. Aufgrund der Gesamtgestaltung des Siebkorbprinzips ist der Bereich hoher Schmelzescherung auf das Siebsegment beschränkt, wodurch die dissipative Temperaturerhöhung gering ausfällt, und somit auch das Temperaturspektrum der einzelnen Schmelzepartikel relativ konstant ist.

Verbesserungspotential bietet die bisherige Gestaltung des Anströmkanals. Die von den Verteilerbohrungen gelieferten Schmelzeströme münden in einen Torus, von dem aus senkrecht zur Extrusionsrichtung der Siebkorb mit Material versorgt wird. Die Schmelze unterliegt im Übergangsbereich von Anströmkanal zum Ringraum keiner eindeutigen Zwangsführung und ermöglicht somit den einzelnen Schmelzepartikeln, sehr unterschiedlichen Fließpfaden zu folgen. Die Vorzugsrichtung der Schmelzeströme in Extrusionsrichtung wird von den Verteilerbohrungen gebildet. Neben diesen bilden sich, in Rotationsrichtung des Torusquerschnitt, Strömungen aus um den Ringraum zu füllen. Die Ausprägung der Querströmung entspricht den sich einstellenden Isobarenverläufen im Torus.

**Aufgabe** der Erfindung ist es daher, eine Vorverteilung für den Siebkorb bereit zu stellen, bei der die Schmelze eindeutig im Ringraum vor und unterhalb des Siebkorbs geführt wird.

Die **Lösung** der Aufgabe ist in Verbindung mit dem Oberbegriff des Anspruchs 1 dadurch gekennzeichnet, daß das Vorverteilelement einen Hauptkanal umfasst, der mit mindestens einem Nebenkanal in fluidischer Verbindung steht, wobei der Nebenkanal schraubenförmig in der Umfangfläche des Dornes ausläuft.

Hierdurch wird erreicht, dass die Einzelströme vor dem Feinverteiler radial und axial durchmischt werden. Die kompakte Bauform und Zwahgsfuhrung minimiert die Breite des Verweilzeitspektrums der Schmelze partikel. Weiterhin wird ein schneller Farbwechsel ermöglicht, ohne eine manuelle Reinigung des Werkzeuges vornehmen zu müssen

Weiterbildungsgemäß ist vorgesehen, dass das Feinverteilelement ein Siebkorb oder eine Siebplatte ist. Es kann aber auch ein Radialverteiler eingesetzt werden, hierbei wird die Schmelze in einen definierten Ringspalt gepresst. Die Ausführung dieses Ringspaltes kann auch dem eines Kleiderbügel- oder Herzkurvenverteilers entsprechen. (Die Arbeitsweise der Pinolen- oder Herzkurvenverteiler beruht auf der Einspeisung durch einen Kanal.)

Vorteilhaft ist es auch, wenn der Nebenkanal in der Einstichtiefe in der Umfangsfläche zum Ende des Kanales stetig abnimmt und der Spalt zwischen dem Vorverteilelement, also dem Dorn und dem Feinverteilelement ebenfalls kleiner wird, also abnimmt. Es ist aber auch denkbar den Kanal und/oder den Spalt konstant zu halten oder die Verränderung von Kanal und/oder Spalt unstetig auszuführen.

In Extrusionsrichtung wird folglich der für die Schmelze zur Verfügung stehende Gesamtquerschnitt kleiner, der Druckgradient wird erhöht und somit wird die Schmelze kontrolliert an den Feinverteiler geführt und über diesen zum Schmelzeausgang geleitet. Durch diese Vergleichmäßigung können stabile und reproduzierbare Bedingungen geschaffen werden, um insbesondere Rohre von gleichbleibender Qualität zu fertigen. Durch diese Vergleichmäßigung können vor dem Feinverteiler stabile und reproduzierbare Bedingungen geschaffen werden, um Rückwirkungen der Vorverteilung auf die Produktqualität zu minimieren.

Zusätzlich sind Vorteile denkbar, wenn zu dem bestehenden Kanal ein weiterer Kanal als Nebenkanal angeordnet ist, der die Verteilung in der Schmelze auf zwei Wegen ermöglicht. Betrachtet man den Schmelzeverlauf in Extrusionsrichtung, so wird diese nach dem Hauptkanal ähnlich einem Gewindegang einmal rechts und einmal links um den Dorn geleitet, wobei mindestens einmal eine Kreuzungsstelle auftrifft, um den Schmelzeverlauf zu verwischen. Hierbei kann die Steigung beider Kanäle unterschiedlich sein, die Kreuzungsstelle muß folglich nicht zwangsläufig nach der Hälfte des Umfanges erreicht werden.

In den Zeichnungen ist schematisch ein Ausführungsbeispiel der erfindungsgemäßen Vorrichtung gezeigt.
- Fig. 1: zeigt eine im Teilschnitt perspektivische Darstellung und
- Fig. 2: einen Längsschnitt durch die Vorrichtung

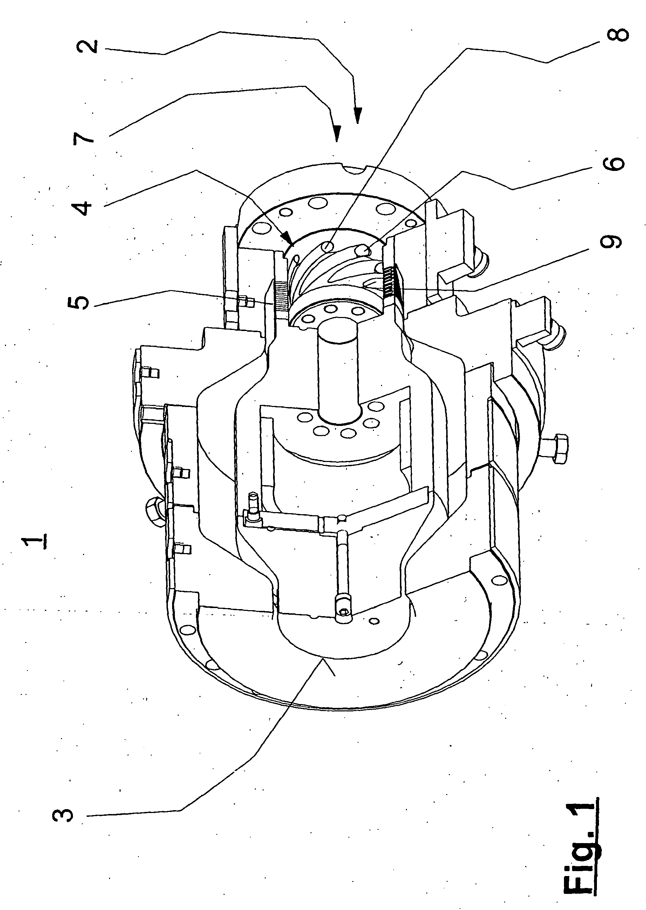

In Figur 1 ist eine perspektivische Darstellung des Extrusionswerkzeuges 1 zu sehen. Betrachtet man den Schmelzeverlauf in Extrusionsrichtung, so gelangt diese von einem nicht dargestellten Extruder über den in dieser Ansicht nicht zu sehenden Schmelzeeingang 2, über ein Vorverteilelement 4 und ein Feinverteilelement 5 zum Schmelzeausgang 3, über den in diesem Fall das Rohr extrudiert wird.

Das Vorverteilelement 4 ist als Dorn 6 ausgeführt und verfügt über einen Hauptkanal 7, ebenfalls nicht dargestellt, der in diesem Fall mit mehreren Nebenkanälen 8 in fluidischer Verbindung steht. Die Nebenkanäle 8 treten am Umfang des Dornes 6 aus und verlaufen in Extrusionsrichtung zunächst schraubenförmig entlang der Umfangfläche 9 des Dornes 6, wobei die Einstichtiefe abnimmt und folglich die Nebenkanäle 8 auf der Umfangsfläche 9 auslaufen.

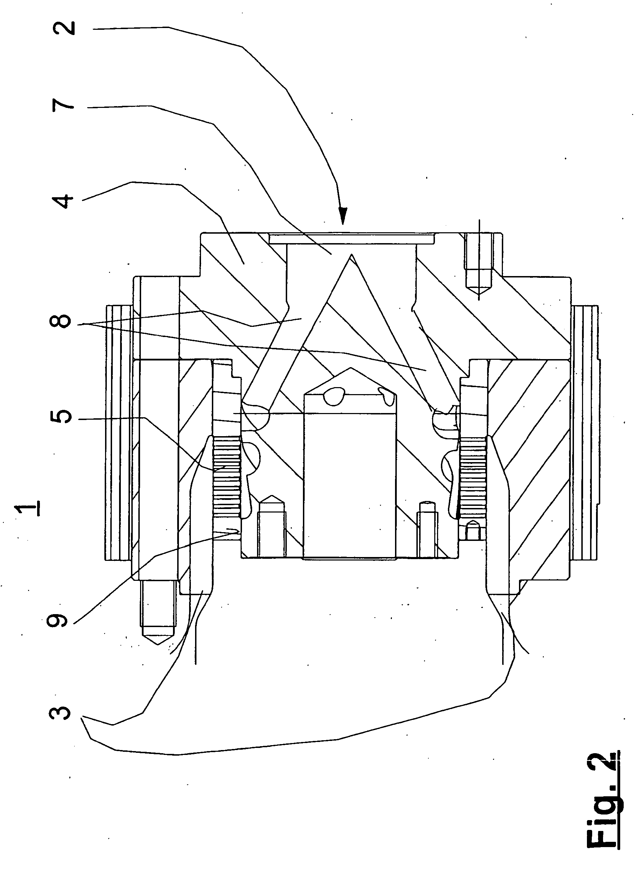

In Figur 2 ist die Vorrichtung im Längsschnitt dargestellt, wobei der Schmelzeeingang 2 rechts und der Schmelzeausgang 3 links ausgeführt ist, die Extrusionsrichtung verläuft somit von rechts nach links. Hier ist deutlich der Dorn 6 mit seinem Hauptkanal 7 und den daran anschlieβenden Nebenkanälen 8 zu sehen. Die Nebenkanäle 8 enden in der Umfangsfläche 9 des Domes, anschließend fügt sich ein Feinverteilelement 5 an - hier ein Siebkorb - über den die Schmelze zum Schmelzeausgang 3 gelangt.

### Bezugszeichenliste:

- 1: Extrusionswerkzeug
- 2: Schmelzeeingang
- 3: Schmelzeausgang
- 4: Vorverteilelement
- 5: Feinverteilelement
- 6: Dorn
- 7: Hauptkanal
- 8: Nebenkanal
- 9: Umfangsfläche des Dorns 6

## Patentansprüche

1. Vorrichtung zum Verteilen von plastischer Kunststoffmasse in einem Extrusionswerkzeug (1), insbesondere Rohrextrusionswerkzeug, umfassend einen Schmelzeeingang (2) und mindestens einen Schmelzeausgang (3),
wobei zwischen Schmelzeeingang (2) und Schmelzeausgang (3) zunächst ein Vorverteilelement (4) und anschließend ein Feinverteilelement (5) angeordnet ist, und
wobei das Vorverteilelement (4) als Dorn (6) ausgeführt ist,
**dadurch gekennzeichnet, dass**
das Vorverteilelement (4) einen Hauptkanal (7) umfasst, der mit mindestens einem Nebenkanal (8) in fluidischer Verbindung steht,
wobei der Nebenkanal (8) schraubenförmig in der Umfangsfläche (9) des Dornes (6) ausläuft.

2. Vorrichtung nach Anspruch 1, **dadurch gekennzeichnet, dass** das Feinverteilelement (5) ein Siebkorb oder eine Siebplatte ist.

3. Vorrichtung nach Anspruch 1, **dadurch gekennzeichnet, dass** das Feinverteilement (5) ein Radialverteiler ist.

4. Vorrichtung nach einem der vorigen Ansprüche, **dadurch gekennzeichnet, dass** die Tiefe des Nebenkanales (8) im Umfang (9) zum Ende des Kanales konstant bleibt, stetig abnimmt oder unstetig abnimmt.

5. Vorrichtung nach einem der vorigen Ansprüche, **dadurch gekennzeichnet, dass** der Spalt zwischen dem Vorverteilelement (4) und dem Feinverteilelement (5) in Extrusionsrichtung zunimmt, konstant bleibt oder abnimmt.

6. Vorrichtung nach einen der vorigen Ansprüche **dadurch gekennzeichnet, dass** neben dem ersten Nebenkanal (8) ein weiterer Nebenkanal gegenläufig angeordnet ist, der ebenfalls schraubenförmig in der Umfangsfläche (9) des Dornes (6) ausläuft, wobei dieser weitere Nebenkanal den ersten Nebenkanal (8) mindestens einmal kreuzt.

## Claims

1. Device for the distribution of plastic synthetic composition in an extrusion die (1), in particular pipe die, comprising a melt input (2) and at least one melt output (3), wherein initially a pre-distribution element (4) and then a fine-distribution element (5) is arranged between melt input (2) and melt output (3), and wherein the pre-distribution element (4) is designed as a mandrel (6), **characterised in that** the pre-distribution element (4) comprises a main channel (7), which is in fluid connection with at least one side channel (8), wherein the side channel (8) discharges spirally in the peripheral surface (9) of the mandrel (6).

2. Device according to claim 1, **characterised in that** the fine-distribution element (5) is a strainer basket or a screen pack.

3. Device according to claim 1, **characterised in that** the fine-distribution element (5) is a radial distributor.

4. Device according to one of the previous claims, **characterised in that** the depth of the side channel (8) in the periphery (9) remains constant, decreases continuously or decreases unsteadily to the end of the channel.

5. Device according to one of the previous claims, **characterised in that** the gap between the pre-distribution element (4) and the fine-distribution element (5) increases, remains constant or decreases in the direction of extrusion.

6. Device according to one of the previous claims, **characterised in that** in addition to the first side channel (8), a further side channel is arranged to be in opposite direction, which likewise discharges spirally in the peripheral surface (9) of the mandrel (6), wherein this further side channel crosses the first side channel (8) at least once.

## Revendications

1. Dispositif de distribution d'une masse plastique plastifiée dans un moule d'extrusion (1), notamment un moule d'extrusion tubulaire, comportant un orifice d'entrée de la masse fondue (2) et au moins un orifice de sortie de masse fondue (3),
un élément de distribution préalable (4) tout d'abord, puis un élément de distribution fine (5), étant disposé entre l'orifice d'entrée de masse fondue (2) et l'orifice de sortie de masse fondue (3), et
l'élément de distribution préalable (4) étant conçu comme un mandrin (6),
**caractérisé en ce que**
l'élément de distribution préalable (4) comporte un canal principal (7) qui est en liaison fluidique avec au moins un canal secondaire (8),
le canal secondaire (8) s'écoulant de façon hélicoïdale dans la surface périphérique (9) du mandrin (6.)

2. Dispositif selon la revendication 1, **caractérisé en ce que** l'élément de distribution fine (5) est une corbeille de tamisage ou une plaque de tamisage.

3. Dispositif selon la revendication 1, **caractérisé en ce que** l'élément de distribution fine (5) est un distributeur radial.

4. Dispositif selon l'une quelconque des revendications précédentes, **caractérisé en ce que** la profondeur du canal secondaire (8) dans la périphérie (9) reste constante, diminue progressivement ou diminue de façon variable en direction de l'extrémité du canal.

5. Dispositif selon l'une quelconque des revendications précédentes, **caractérisé en ce que** la fente entre l'élément de distribution préalable (4) et l'élément de distribution fine (5) augmente, reste constante ou diminue dans la direction d'extrusion.

6. Dispositif selon l'une quelconque des revendications précédentes, **caractérisé en ce qu'**en plus du premier canal secondaire (8), un autre canal secondaire, qui sort également de façon hélicoïdale dans la surface périphérique (9) du mandrin (6), est disposé en sens contraire, cet autre canal secondaire croisant au moins une fois le premier canal secondaire (8).
